Europäisches Patentamt

European Patent Office

Office européen des brevets

(19)

(11) Publication number: **0 189 645**
**A1**

(12) # EUROPEAN PATENT APPLICATION

(21) Application number: **85308306.1**

(22) Date of filing: **14.11.85**

(51) Int. Cl.⁴: **G 01 T 1/40**

(30) Priority: **10.01.85 US 690430**

(43) Date of publication of application:
**06.08.86 Bulletin 86/32**

(84) Designated Contracting States:
**DE FR GB NL**

(71) Applicant: **FILTROL CORPORATION**
**300 Lakeside Drive**
**Oakland California 94643(US)**

(72) Inventor: **Utts, Bradley K.**
**102 Fernwood**
**South Russell Ohio 44022(US)**

(72) Inventor: **Sparacia, Frank M.**
**38300 Aurora Road**
**Solon Ohio 44139(US)**

(72) Inventor: **Wimer, Oley D.**
**227 W. Streetsboro Road**
**Hudson Ohio 44236(US)**

(74) Representative: **Oliver, Roy Edward et al,**
**POLLAK MERCER & TENCH High Holborn House 52-54**
**High Holborn**
**London WC1V 6RY(GB)**

(54) **Pulsar-stabilized radiation detectors.**

(57) A radiation detector (1) useful for well-logging and other applications contains a stabilizing pulsar device (7) comprising a scintillator (21) coupled to a photodetector (9) and including a radioactive source (27) such as $Am^{241}$ which simultaneously emits X-rays and low energy particles such as alpha or beta particles upon decay. The pulsar device (7) is coupled to the radiation detector (1), which utilizes a scintillation crystal (17) and a photodetector (5), and the outputs (8, 10) from the two photodetectors (5,9) are processed through a coincident/anticoincident gate (11, 13, 15) alternately to stabilize the X-rays or to read the environmentally-induced radiation.

FIG. I

Croydon Printing Company Ltd

-1-

This invention relates to radiation detection devices, particularly of the type including an inorganic scintillation crystal which is optically coupled to a photomultiplier tube (PMT) and which emits detectable light in response to exposure to ionizing radiation. More particularly, the invention relates to the use of a radioactive pulsar embedded in a second crystal coupled to a second PMT to provide stabilization for the detector device. Such detector devices find use in various industrial and research applications, including well-logging, high energy physics, aircraft exploration, and the like.

Devices for detecting and measuring radiation energy have been known for many years. One type of device which is in common use is the scintillation phosphor, which employs a substance having the ability to convert ionizing radiation energy into light energy. Such a phosphor is typically coupled to a photomultiplier tube or to a photodiode, which converts the light energy into an electrical pulse or current. This current is further amplified and electronically processed to provide useful data concerning the type, strength and other characteristics of the radiation energy.

A number of naturally-occurring and synthetically-produced materials have been found to possess the property of converting ionizing radiation energy into pulses of light. Among these are organic substances, such as anthracene, various synthetic plastics materials, and naturally-occurring as well as doped inorganic crystals, such as bismuth germanate, calcium and cadmium tungstates, sodium iodide doped with thallium and calcium fluoride doped with europium.

The most common types of ionizing radiation are gamma or X-rays, alpha particles and beta particles (electrons), having energies ranging from a few thousand electron volts (Kev) to several million volts (Mev).

The different types of scintillators have widely varying characteristics, such as density, decay constant, scintillation efficiency, physical strength, hygroscopicity, etc. The pulses of light emitted during scintillation events generally are proportional to the energy deposited in the phosphor. These pulses are detected and counted by a photodetector, such as a photomultiplier tube or a photodiode, the latter being used where a strong magnetic field is present, when space is a constraint or where high-energy radiation is being measured and background noise is not a serious problem. Each photomultiplier tube has its own characteristics and it is essential that the right tube be selected for the intended use. The current output of the photomultiplier tube is subject to certain variables which necessitate the use of a calibrating standard. Among the variables are temperature, ageing or failure of the electronic and other parts, and fluctuations in the power supply.

Prior efforts to stabilize scintillation detectors have involved the use of a flashing light source, an alpha-emitting radioactive source such as $Am^{241}$ adjacent the scintillator at a point opposite the photodetector, or an alpha source distributed throughout the scintillation crystal. Yet another approach has been to incorporate the radioactive source into a reference crystal to form a pulsar, which is then coupled to the scintillation crystal opposite the photodetector, as shown in US-A-3030509, for instance. These attempts at standardization all have drawbacks, including thermal instability, low and variable alpha-counting efficiency and the need to provide external light sources.

This invention relates to a pulsar device, useful for the stabilization of a scintillation radiation detector, and to a detector assembly which includes such pulsar device.

According to one aspect of this invention, a stabilizing pulsar device for radiation detectors, comprising a photodetector optically coupled to an inorganic scintillator and a radioactive source, is characterized in that the radioactive source simultaneously emits two separate particles of radiation including an X-ray and an alpha or beta particle and is positioned so that the scintillator interacts with substantially all of the alpha or beta particles, as well as with X-rays emitted in the direction of the photodetector, but does not interact with X-rays emitted in the opposite direction.

According to another aspect of this invention, a stabilizing pulsar assembly comprising an inorganic scintillator and a radioactive source, is characterized in that the scintillator has a high absorption efficiency for alpha particles and comprises:

(1) a non-hygroscopic scintillation crystal having a first flat polished surface for optical coupling to photodetecting means and a second flat polished surface generally parallel to the first surface and

(2) a rear scintillation crystal having two generally parallel surfaces, one being a polished surface optically coupled to the second surface of the front crystal, and
in that a small amount of $Am^{241}$ is disposed along the interface between the coupled surfaces of the crystals, the $Am^{241}$ simultaneously emitting an alpha particle with an energy of about 5.48 MeV and an X-ray with an energy of approximately 60 Kev.

A stabilized radiation detector device, according to a further aspect of this invention, comprises an environmental detector comprising a first scintillation crystal optically coupled to a first photomultiplier tube, and a pulsar assembly in proximity to a surface of the scintillation crystal remote from the first photomultiplier tube and is characterised in that the pulsar assembly comprises:

(1) a radioactive source which simultaneously emits two particles of energy, one being an X-ray and the other being an alpha or beta particle,

(2) a second non-hygroscopic inorganic scintillation crystal surrounding the radiation source so as to interact with the alpha or beta particle while permitting the portion of X-ray emitted in the direction of the environmental detector to pass into the first scintillation crystal and

(3) a second photomultipler tube optically coupled to the second scintillation crystal, and in that a gating circuit having a coincident mode and an anti-coincident mode and arranged to receive signals from the output of the first photomultiplier tube and from the output of the second multiplier tube, the circuit, when in the coincident mode, being capable of standardizing the environmental detector by comparing it with the signal from the pulsar assembly generated by interaction of the X-ray emission with the second scintillation crystal and the circuit, when in the anti-coincident mode, passing signals resulting from events produced by interactions between environmental radiation sources and the first scintillation crystal without interference with the stabilizing signal.

Thus, a radiation detector according to this invention typically includes a first scintillation crystal encased in a housing and optically coupled to a first photodetector, such as a photomultiplier tube; at the rear of the crystal and so opposite this photodetector, the housing receives a stabilizing pulsar device. This pulsar device advantageously comprises a second inorganic scintillator, a photodetector, such as a photomultipler tube optically coupled to the scintillator, and a radioactive pulsar which simultaneously emits two separate particles of energy including an X-ray and an alpha or beta particle. The radioactive source is positioned so that the second scintillator interacts with substantially all of the alpha or beta particles and all of the X-rays emitted in the direction of the pulsar photodetector, but does not interact with the X-rays emitted in the opposite direction toward such radiation detector. Thus, these X-rays pass through the housing of the detector and interact with the first scintillation crystal.

The scintillator used with the pulsar desirably comprises a front crystal optically coupled to the photodetector and a rear crystal of the same material, the crystals being optically coupled to one another along closely-conforming polished mating surfaces. The radioactive source is located in the space between the mating surfaces.

In use, the outputs from the two photodetectors are simultaneously transmitted to a gating circuit, which processes the two signals in either a coincident or an anti-coincident mode. The coincident mode is used for purposes of calibrating the radiation detector by comparing the signal pulse through the first detector with the pulse obtained from the second detector coupled to the pulsar crystal. In the anti-coincident mode, the gate passes the environmental signal from the first detector and effectively filters out the signal from the pulsar in a matter described in more detail below.

In order that the invention may be fully understood and appreciated, a preferred embodiment of it is described below, by way of illustration, in conjunction with the accompanying drawings, in which:

Figure 1 shows a schematic arrangement, partially in cross-section, of a radiation detector device embodying the operating principles of the present invention;

Figure 2 shows an enlarged detailed view of the area 2 shown in Figure 1; and

Figure 3 shows a cross-sectional view of a pulsar useful in carrying out the present invention.

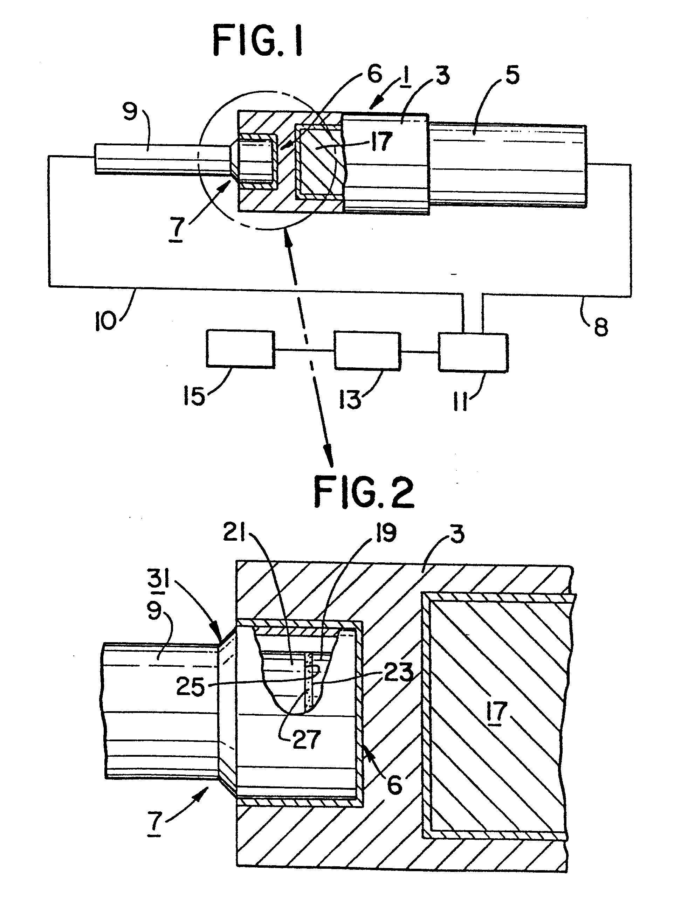

Figure 1 shows a schematic arrangement of a device 1 for detecting environmentally-occurring ionizing radiation. The device 1 is stabilized with a novel form of pulsar. The device 1 includes a crystal housing 3, containing an inorganic scintillation crystal 17, and a photomultiplier tube 5 optically-coupled to the crystal 17. In this embodiment, the crystal housing 3 has a well 6 opposite the photomultiplier tube 5 and, in the well 6, a pulsar assembly 7 is located and is optically coupled to a second photomultiplier tube 9. Output connections 8 and 10 from the two respective photomultiplier tubes 5 and 9 go to a signal processor, shown generally as a gating circuit comprising a gate 11, an amplifier 13 and an analyzer 15.

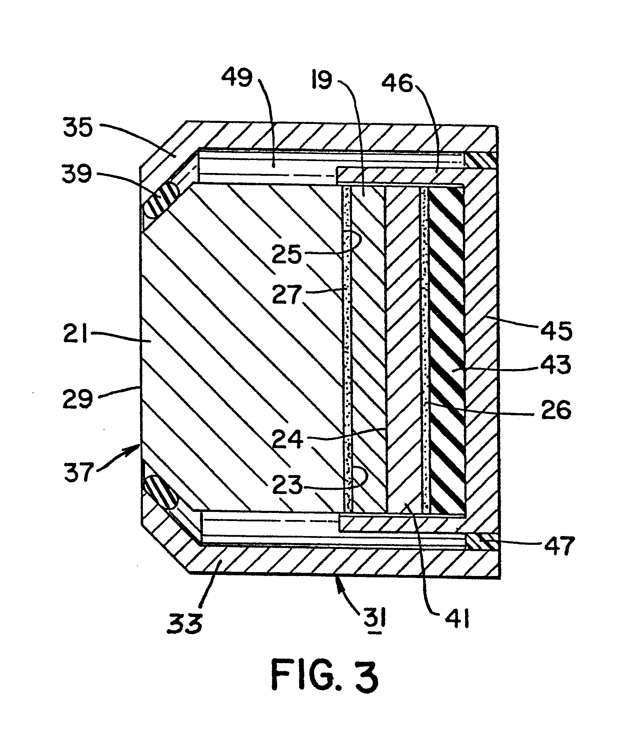

Referring now to Figure 2, the pulsar assembly 7 is positioned in the well 6 of the crystal housing 3 and is secured in place by appropriate means, such as welding, cementing or the use of flanges. The assembly 7 comprises an inorganic scintillator which, in a preferred embodiment, consists of a rear scintillation crystal 19 and a front scintillation crystal 21 having opposed, polished mating surfaces 23, 25. A thin layer 27 of a radioactive dopant, such as $Am^{241}$, is interposed

between the polished surfaces 23,25. The front crystal 21 is optically coupled to the photomultiplier tube 9, using a suitable coupling material such as silicone grease. The entire pulsar assembly is enclosed in a housing 31, the details of which are shown in Figure 3.

The detector housing 3 contains a scintillation crystal 17 of the type commonly used for the detection of ionizing radiation. Examples are thallium-activated sodium iodide or caesium iodide, sodium-activated calcium iodide or various self-activated scintillators, such as bismuth germanate, calcium tungstate, cadmium tungstate and barium fluoride.

In Figure 3, the housing 31 comprises a cylindrical can 33, e.g. of aluminium with a frustoconical section 35 terminating in an opening 37. The front crystal 21 fits into the can 33 in abutting contact with a suitably positioned 0-ring 39 or other elastomeric or resinous material. The thin layer 27 of the $Am^{241}$ is deposited, for example by evaporation from a solution of $Am^{241}Cl$, on the polished surface 25 of the front crystal 21 or alternatively on the polished surface 23 of the back crystal 19. In any event, the two polished surfaces 23,25 are in intimate contact with one another and have the layer 27 of $Am^{241}$ sandwiched therebetween. The use of an air interface between the two polished surfaces 23,25 to couple the two crystals 19,21 optically ensures an extremely high alpha particle transmission efficiency. The use of a glue or other binder at the interface is avoided, inasmuch as it undesirably decreases transmission efficiency due to the absorption of alpha particles by the binder. The rear crystal 19 is sufficiently thin so as not to impede the transmission of X-rays therethrough. In the case of calcium fluoride doped with europium, a thickness of 1.5-3.2 mm (1/16" to 1/8") is adequate to stop the passage of low-energy alpha particles emitted by the $Am^{241}$, while permitting the 60 Kev gamma rays to pass through into the crystal 17 of the radiation detector.

A reflector 41, made of a suitable reflective material such as aluminium oxide or magnesium oxide in a silicon matrix, is held in contact with the back crystal 19 by a compressible pressure pad 43, made of foam rubber or synthetic elastomer, for instance. The entire crystal assembly is positioned within the housing 31 by a cup-shaped end cap 45, the wall 46 of the cap 45 extending into the annular space 49 between the crystals 19,21 and the housing 31. One or more thin pads 26 of polytetrafluoroethylene or other suitable inert plastics material are used as shims to ensure proper alignment and fit of the crystals and other component parts within the housing 31. The end cap 45 is secured to the housing by means of an epoxy resin 47 or other suitable adhesive.

Although the pulsar assembly 7 has a reflector 41 on the surface of the rear crystal 19 opposite the photomultiplier tube 9, there is no corresponding reflective layer in the annular space 49 between the sides of the pulsar crystals 19,21 and the housing 31. The cylindrical and frustoconical sides of the front crystal 21, as well as the unpolished surfaces of the back crystal 19, are sanded or otherwise treated to give a highly diffuse surface. This diffuse surface, and the absence of reflective material around the crystals, cooperate to prevent the undesirable formation of a double peak in the gamma ray spectrum. As a scintillation event occurs in the rear crystal 19, it loses a certain amount of light or energy as it passes through the air interface between the two crystals 19,21 and reaches the PMT 9 with reduced intensity. By not using reflective material around the front crystal 21, the intensity of events occurring in the front crystal is equalized with that of events in the rear crystal, thereby avoiding the formation of two separate energy peaks.

In operation, the detector assembly 1 is placed in an environment in which radiation levels and types are to be quantified and identified. A typical application is a well-logging operation, wherein the detector is lowered into a well hole and environmental radiation from the earth formation is recorded, with possible oil-bearing strata being located and characterized.

When logging data are being collected and processed, the gate 11 (shown in Figure 1) is in the anti-coincident mode, allowing only the environmental signals to be passed through the amplifier 13 and the signal processor 15, while filtering out the gamma signals emanating from the $Am^{241}$ radiation source 27. In this event, the radiation spectrum does not contain the 60 Kev stabilization peak.

When it is desired to calibrate the system, the gate 11 is switched to the coincident mode, whereupon it passes signals only if they are received from the outputs 8,10 of both photomultiplier tubes 5,9. As previously mentioned, the $Am^{241}$ simultaneously emits an alpha particle with a 5.4 Mev peak and an X-ray having a 60 Kev peak. The relatively low energy alpha particles are stopped with a high degree of efficiency, exceeding 98%, in the $CaF_2(Eu)$ crystal and never reach the scintillation crystal 17 in the detector. Thus an event involving an alpha particle interaction is recorded in the pulsar photomultiplier tube 9, but no such event is seen or recorded in the crystal 17 and is not transmitted through the photomultiplier tube 7 to the gate. Absent a coinciding event from both tubes, the alpha particle interaction is not a recorded event since it does not pass the gate.

On the other hand, the 60 Kev X-rays emitted simultaneously with the alpha particle enter the front pulsar crystal 21, where they generate scintillation events which are recorded by the PMT 9 sending a separate signal to the gate 11. Additional X-rays pass through the back crystal 19, which is sufficiently thin so as not to impede their transmission, and enter the main detector crystal 17 where they interact with the crystal and generate a signal denoting an ionization event within the crystal 17. This signal is detected by the PMT 5 and is relayed to the gate 11, where it coincides with the signal from the pulsar 1, resulting in a coincident signal having a known pulse height. This signal is then fed into a logic circuit which electronically adjusts the position of the photopeak from the detector crystal, thereby stabilizing the radiation crystal 17 and the electronics of the detector 7.

In a preferred embodiment of the invention, $CaF_2(Eu)$ and $Am^{241}$ are used in the construction of the pulsar. $CaF_2(Eu)$ is an excellent detector for charged particles, even in the low energy range of a few Kev. This inorganic crystal is hard, inert and non-hygroscopic. It has good resistance to thermal and mechanical shock and can be fabricated into a variety of detector geometries. It has a wavelength of maximum emission of 435nm and a decay constant of 0.94 microseconds. The index of refraction, at 435nm, is 1.44 and its density is 3.19.

$Am^{241}$ is an excellent radioactive source for the present invention, because of the simultaneous emission of an alpha particle having low energy of 5.48 Kev and an alpha particle of X-ray having an energy of 60 Kev with a count rate of 50-2000 counts per second.

The $Am^{241}$ is deposited on the polished surface of the crystal from a solution of $Am^{241}Cl$.

Although the pulsar has been described in the context of an $Am^{241}$ source sandwiched between two crystals of $CaF_2(Eu)$, other materials may be used in the pulsar without departing from the scope of the present invention. The use of $CaF_2(Eu)$ and $Am^{241}$ has several advantages including the following: (a) the pulsar is stable over a wide temperature range, e.g. from -55°C to 150°C; (b) $CaF_2(Eu)$ is non-hygroscopic thereby eliminating the necessity of assembling the pulsar in a drybox, and providing a vapour free or airtight container for the crystals; (c) the pulsar has an alpha particle detection efficiency greater than 98%; and (d) the arrangement of the pulsar within the housing, and the strategic location of reflective and diffuse surfaces within the housing 31 result in the production of a single, easily identified photopeak.

Although $CaF_2(Eu)$ is a preferred scintillation crystal of the present invention, other non-hygroscopic crystals having a low index of refraction can be used instead. Examples are CsI(Tl) and $BaF_2$. As previously mentioned, the low index permits air coupling between the polished surfaces of the two crystals, thereby minimizing the loss of alpha particle emission into the coupling medium. However, as previously mentioned, because of its combination of non-hygroscopicity, low index of refraction and relatively high conversion efficiency, $CaF_2(Eu)$ is the preferred scintillator.

Other radioactive sources having simultaneous emissions of X-rays and alpha or beta particles may be used in place of $Am^{241}$. One such example is cobalt$^{60}$ which simultaneously emits two gamma rays having energies of 1.17 and 1.33 Mev and a beta particle with an energy of 320 Kev. The stopping power of the pulsar crystal is much less for beta particles than it is for alpha particles. For this reason, the two crystals preferably are reversed so that the back crystal is sufficiently thick to stop the particles and prevent them from reaching the scintillation crystal of the environmental detector, while the thickness of the front crystal is not critical.

The housing of the environmental detector need not be provided with a well to house the pulsar. Instead, the pulsar, packaged with suitable electronics, can be used as a probe, which can be brought into close proximity with the environmental detector in order to stabilize it. In fact, it could be used to stabilize two or more detectors simultaneously. Alternatively, the pulsar may be permanently attached to the housing, e.g. by welding. The use of flanges on the housings of the detectors permits rapid coupling/decoupling, where portability and/or interchangeability are desired.

Other variations can be made in the teachings of the present invention without departing from the concept of providing a pulsar which automatically compensates for temperatures and photomultiplier gain in both the scintillation crystal and the photomultiplier tube by providing a constant pulse height for stabilization. For example, the size and shape of the scintillator used for the pulsar, as well as the distribution of radio-active material within the pulsar, can be varied without departing from the invention. The radioactive source can be a point source, several point sources or a diffused source deposited within a unitary pulsar crystal by appropriate means.

CLAIMS:

1.  A stabilizing pulsar device for radiation detectors, comprising a photodetector (9) optically coupled to an inorganic scintillator (21) and a radioactive source (27),
characterised in that
the radioactive source simultaneously emits two separate particles of radiation including an X-ray and an alpha or beta particle and is positioned so that the scintillator (21) interacts with substantially all of the alpha or beta particles, as well as with X-rays emitted in the direction of the photodetector (9), but does not interact with X-rays emitted in the opposite direction.

2.  A pulsar device according to claim 1, wherein the scintillator (21) comprises a front scintillation crystal (21) optically coupled to the photodetector (9) and a rear scintillation crystal (19) and the crystals (19,21) are optically coupled to one another along closely-conforming mating surfaces (23,25), the radioactive source (27) occupying at least a portion of the space between the two closely conforming crystals (19,21).

3. A pulsar device according to claim 1 or 2, wherein the radioactive source (27) is $Am^{241}$ capable of simultaneously emitting an alpha particle having an energy of 5.48 Mev and an X-ray having an energy of 60 Kev.

4.  A pulsar device according to any of claims 1 to 3, wherein the scintillation crystal (21) is composed of $CaF_2(Eu)$.

5.  A stabilizing pulsar assembly, comprising an inorganic scintillator (21) and a radioactive source (27),
characterised in that the scintillator (21) has a high absorption efficiency for alpha particles and comprises:

(1) a non-hygroscopic front scintillation crystal (21) having a first flat polished surface (29) for optical coupling to photodetecting means (9) and a second flat polished surface (25) generally parallel to the first surface (29) and

(2) a rear scintillation crystal (19) having two generally parallel surfaces (23,24), one being a polished surface (23) optically coupled to the second surface (25) of the front crystal (21), and

in that a small amount (27) of $Am^{241}$ is disposed along the interface between the coupled surfaces (23,25) of the crystals (19,21), the $Am^{241}$ simultaneously emitting an alpha particle with an energy of about 5.48 Mev and an X-ray with an energy of approximately 60 Kev.

6. A pulsar assembly according to claim 5, wherein the scintillator (21) is composed of $CaF_2(Eu)$.

7. A pulsar assembly according to claim 5 or 6, wherein the front crystal (21) is optically coupled to a photomultiplier tube (9).

8. A pulsar assembly according to any of claims 5 to 7, wherein the second surface (24) of the rear crystal (19) is in contact with an optically-reflective material (41).

9. A stabilized radiation detector device comprising an environmental detector (1) comprising a first scintillation crystal (17) optically coupled to a first photomultiplier tube (5) and a pulsar assembly (7) in proximity to a surface of the scintillation crystal (17) remote from the first photomultiplier tube (5), characterised in that the pulsar assembly (7) comprises:

(1) a radioactive source (27) which simultaneously emits two particles of energy, one being an X-ray and the other being an alpha or beta particle,

(2) a second non-hygroscopic inorganic scintillation crystal (19,21) surrounding the radiation source (27) so as to interact with the alpha or beta particle while permitting the portion of X-ray emitted in the direction of the environmental detector (1) to pass into the first scintillation crystal (17) and

(3) a second photomultiplier tube optically coupled to the second scintillation crystal (19,21);  and

in that a gating circuit (11,13,15) having a coincident mode and an anti-coincident mode and arranged to receive signals from the ouput (8) of the first photomultiplier tube (5) and from the output (10) of the second photomultiplier tube (9), the circuit (11,13,15), when in the coincident mode, being capable of standardizing the environmental detector (1) by comparing it with the signal from the pulsar assembly (7) generated by interaction of the X-ray emission with the second scintillation crystal (19,21) and the circuit (11,13,15), when in the anti-coincident mode, passing signals resulting from events produced by interactions between environmental radiation sources and the first scintillation crystal (17) without interference with the stabilizing signal.

10. A detector device according to claim 9, wherein $Am^{241}$ is the radioactive source (27) used as the pulsar.

11. A radiation detector according to claim 9 or 10, wherein the inorganic scintillation crystal (19,21) used with the pulsar (7) is $CaF_2(Eu)$.

# FIG. 1

# FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-4 450 354  (SMITH et al.) * Column 4, lines 5-35; column 7, line  3 - column 8, line 67; figures 1-5 * | 1-11 | C 12 G 01T/40 |
| A | US-A-4 053 767  (KAMPFER et al.) *   Abstract;   column  3,  lines 45-64; column 4, line 61 - column 5, line 37; figures 1,2 * | 1,3,7, 8,10 | |
| A | NUCLEAR INSTRUMENTS & METHODS IN PHYSICS RESEARCH, vol. 224, no. 1/2, July 1984, pages 318-319, Elsevier Science Publishers B.V., Amsterdam, NL; M. KOBAYASHI et al.: "A NaI(Tl)-241 Am light pulser of increased reliability by eliminating epoxy sealing" * Whole document * | 1,3 | |

TECHNICAL FIELDS SEARCHED (Int Cl 4)

G 01 T

The present search report has been drawn up for all claims

| Place of search | Date of completion of the search | Examiner |
|---|---|---|
| THE HAGUE | 18-04-1986 | DATTA S. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document. but published on. or
    after the filing date
D : document cited in the application
L : document cited for other reasons

& : member of the same patent family, corresponding
    document

EPO Form 1503 03 82